# EUROPÄISCHE PATENTSCHRIFT

(11) **EP 0 589 832 B1**
(45) Veröffentlichungstag und Bekanntmachung des Hinweises auf die Patenterteilung: **06.10.1999**
(21) Anmeldenummer: 93810622.6
(22) Anmeldetag: 31.08.1993
(51) Int. Cl.: C02F 1/20, B01D 19/00

(54) **Verfahren und Anlage zum Deoxidieren von Wasser**
Process for deoxidising water
Méthode pour la désoxygéntion de l'eau

(30) Priorität: 23.09.1992 EP 92810725
(43) Veröffentlichungstag der Anmeldung: 30.03.1994
(73) Patentinhaber: Sulzer Chemtech AG, CH-8404 Winterthur (CH)
(72) Erfinder: Mandrin, Charles, Dr., CH-8406 Winterthur (CH)
(74) Vertreter: Heubeck, Bernhard

(56) Entgegenhaltungen:
- EP-A- 0 327 491
- EP-A- 0 329 601
- EP-A- 0 391 839
- DE-A- 2 519 037
- PATENT ABSTRACTS OF JAPAN vol. 6, no. 3 (C-86)9. Januar 1982 & JP-A-56 127 680 (AGENCY OF IND SCIENCE & TECHNOL) 6. Oktober 1981
- PATENT ABSTRACTS OF JAPAN vol. 5, no. 183 (M-97)21. November 1981 & JP-A-56 104 131 (HITACHI) 19. August 1981
- PATENT ABSTRACTS OF JAPAN vol. 16, no. 369 (C-972)10. August 1992 & JP-A-41 018 090 (KONICA) 20. April 1992

## Beschreibung

Die Erfindung betrifft ein Verfahren und eine Anlage zum Deoxidieren von Wasser, insbesondere von Meerwasser, welches zur Entfernung seines Sauerstoffgehaltes mit einem gasförmigen Treibmittel in Kontakt gebracht wird, welches Treibmittel in einem Kreislauf zirkuliert wird und wobei der Sauerstoff aus dem mit ihm beladenen Treibmittel in einer Vorrichtung durch katalytische Verbrennung mittels eines Brenngases entfernt wird. Eine verbreitete Methode zum Deoxidieren besteht darin, das Wasser in einer Mehrstufenvakuumkolonne zu entgasen. Dies ist aber sehr aufwendig und mit hohem Energieverbrauch verbunden. Zudem müssen noch korrosive und kostspielige Chemikalien eingesetzt werden, um verbliebene Sauerstoffspuren zu entfernen. Angesichts all dieser Probleme wurde versucht, das Wasser mittels eines geschlossenen Gaskreislaufes zu deoxidieren, wie dies z.B. in der EP-Anmeldung 0327491 beschrieben ist. Auch diese Verfahren, bei denen z.B. Erdgas als Brenngas durch eine separate Leitung in das Katalysatorbett eingespritzt wird, weisen aber noch schwerwiegende Nachteile und Probleme auf. So sind relativ aufwendige Anlagen mit grossen Umwälzeinrichtungen, mit genauen Dosiereinrichtungen und Ueberwachungseinrichtungen erforderlich, um im Kreislaufbetrieb die notwendigen Gaszusammensetzungen immer einhalten zu können und Betriebsfehler auszuschliessen. Ueberdies werden Zusatzstoffe und zugehörige, wiederum aufwendige Dosier und Ueberwachungseinrichtungen erforderlich. Vor allem aber besteht Explosionsgefahr bei diesen relativ grossen Anlagen. Denn es ist in der Praxis nicht möglich, ein Leck auszuschliessen. Deshalb muss die ganze Anlage explosionsgeschützt sein und dazu z.B. mit einer zusätzlichen aufwendigen, energieverbrauchenden und platzraubenden Belüftungseinrichtung versehen werden. Dies ist aber oft aus Platzgründen gar nicht möglich, z.B. auf Plattformen oder auf Schiffen und insbesondere nicht bei Nachrüstungen bestehender Anlagen. Wenn der notwendige Druck im Kreislauf durch Zugabe von Stickstoff aufrechterhalten wird, dann erfordert dies wiederum einen zu hohen Stickstoffverbrauch. Mit Luft als Druckhaltemittel entsteht anderseits ein zusätzlicher Brennstoffverbrauch und eine unzulässig hohe CO₂-Produktion.

Aufgabe der vorliegenden Erfindung ist es daher, die Nachteile der bekannten Verfahren zu überwinden und vor allem ein explosionssicheres Verfahren zu schaffen, welches keine aufwendigen Schutzmassnahmen erfordert. Die Anlage soll zudem einfach und betriebssicher zu steuern sein, wenig Betriebsstoffe und Energie verbrauchen und keine Schadstoffe inklusive CO₂ an die Atmosphäre abgeben.

Diese Aufgabe wird erfindungsgemäss gelöst durch die Verfahren nach Anspruch 1 oder 2 und Anlagen gemäss Anspruch 7 oder 8. Die abhängigen Ansprüche betreffen vorteilhafte Weiterbildungen von Verfahren und Anlage.

Die Erfindung besteht im wesentlichen darin, dass im ganzen Kreislauf eine Gasmischung erzeugt und aufrechterhalten wird, welche bei allfälligem Austritt durch ein Leck in die Umgebungsluft nicht explosionsfähig ist, dass mit einfachen Mitteln eine explosionssichere Zuleitung einer entsprechenden Gasmischung bis zum Kreislauf eingesetzt wird und dass diese zugeführte Gasmischung unmittelbar beim Eintritt in den Kreislauf mit dem Kreislaufgas vermischt wird, so dass nirgends in der zu schützenden Zone, in der sich die Anlage befindet, eine zündfähige Gasmischung entstehen kann. In Bezug auf das Verfahren nach Anspruch 1 wird dazu der zugeführten Gasmischung einerseits ein Brenngasanteil, von z.B. über 10 mol %, beigegeben, welcher nach Einmischung in den Kreislauf in der resultierenden Kreislaufmischung noch eine katalytische Reduktion des gesamten Sauerstoffs erlaubt. Anderseits wird der Inertgasanteil in der zugeführten Gasmischung mindestens so hoch gehalten, dass die resultierende Gasmischung im Kreislauf unter der Zündgrenze liegt. Diese Randbedingungen für die zugeführte Gasmischung ergeben dabei überraschenderweise einen relativ weiten zulässigen Bereich, welcher mit geringem Dosieraufwand, mit entsprechend einfachen und robusten Geräten und mit grosser Betriebssicherheit erreicht und eingehalten werden kann.

Im folgenden wird die Erfindung im Zusammenhang mit den Figuren und anhand von Beispielen näher erläutert. Es zeigt:
- Fig.1: das Prinzip des erfindungsgemässen Verfahrens an einer schematisch dargestellten Anlage,
- Fig.2a: ein Beispiel einer Anlage mit Doppelrohrzuführung für eine Brenngas/Inertgas-Mischung und einer Misch- und Dosiereinrichtung,
- Fig.2b: eine Anlage mit getrennter Brenngas und Inertgaszufuhr,
- Fig.3: eine Anlage mit Konvektionsströmung als Fördermittel des Gaskreislaufes,
- Fig.4: den Verlauf des Ueberschussfaktors E und der Gaszusammensetzung des Kreislaufgases in Funktion der Zusammensetzung der zugeführten Gasmischung, am Beispiel Erdgas/Stickstoff.

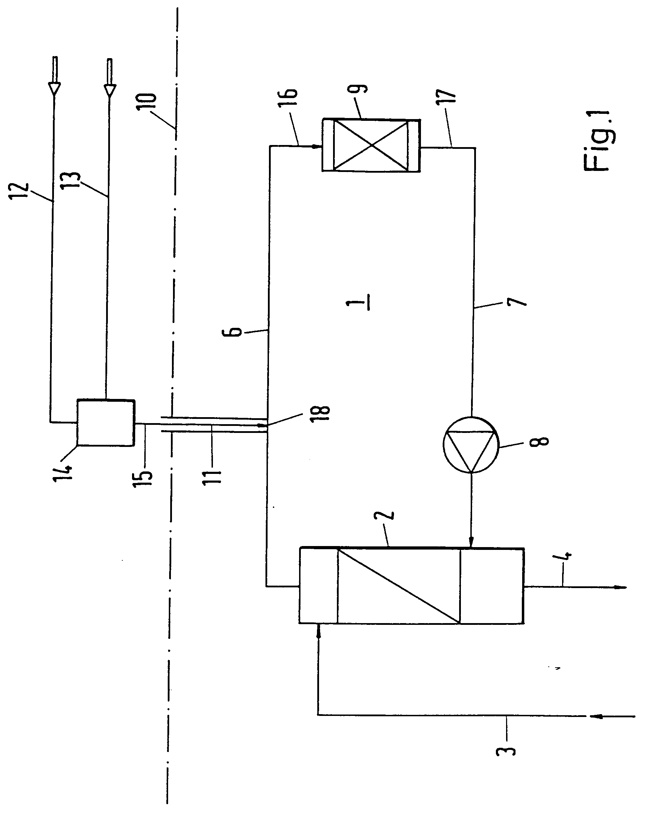

In einer zu schützenden Zone mit Grenze 10 nach Fig.1 liegt die Anlage 1 zur Deoxidation von Wasser. Sie enthält eine Kontakteinrichtung 2 mit einem Zulauf 3 für sauerstoffhaltiges Wasser und einem Ablauf 4 für das deoxidierte Wasser. Ein Gaskreislauf führt durch die Kontakteinrichtung 2 über die Leitung 6 in eine katalytische Verbrennungseinrichtung 9 und von dieser über eine Rückleitung 7 und mittels eines Fördermittels 8 angetrieben wieder in die Kontakteinrichtung 2 zurück. Die Gasmischung im Kreislauf wird gespiesen durch eine explosionssichere Zuleitung 11. Dabei wird ein Brenngas über eine Zuleitung 12 und ein Inertgas über eine Zuleitung 13 in eine Dosier- und Mischeinrichtung 14 geführt und das daraus resultierende Gasgemisch 15 anschliessend über die explosionssichere Zuführung 11 zum Kreislauf geleitet und dort dem Kreislaufgas zugemischt (18), so dass das Kreislaufgas immer und überall eine Zusammensetzung aufweist, welche nicht zündfähig ist. Am Eingang des Katalysators 9 muss dabei die Kreislaufgasmischung (16) mindestens einen Ueberschussfaktor E = 1 aufweisen. Der Ueberschussfaktor E ist hier definiert als Brennstoffkonzentration des Kreislaufgases (16) dividiert durch die stöchiometrische Bedarfskonzentration. Anderseits muss der Brennstoffanteil im Kreislaufgas (16) vor dem Katalysator immer noch unter der Zündgrenze des Kreislaufgasgemisches liegen.

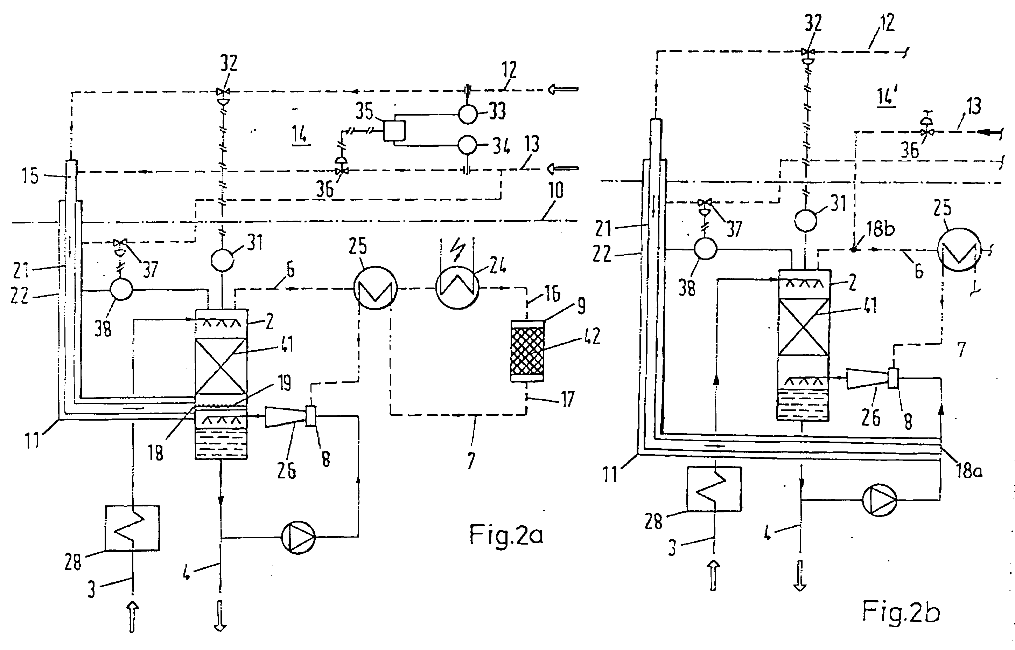

Die Einstellung und Steuerung der erforderlichen Brenngas/Inertgas-Mischung 15 kann mit einfachen und zuverlässigen Geräten auf kostengünstige Art erfolgen. Gemäss Ausführungsbeispiel von Fig.2a wird der Durchsatz des Brenngases 12 von einem Steuerventil 32 so geregelt, dass der Druck in der Kontakteinrichtung 2 konstant bleibt. Dabei wird das Steuerventil 32 von einem Druckregler 31 gesteuert. Im Betrieb tendiert der Druck des Kreislaufgases zu sinken, wegen hoher Löslichkeit von Brenngas und entstehendem CO₂ in Wasser und auch weil der durch katalytische Verbrennung produzierte Wasserdampf kondensiert und mit dem Wasser 4 abgeführt wird. Zur Dosierung des Inertgasanteils 13 im Gasgemisch 15 können wiederum einfache Geräte eingesetzt werden. Hier werden die Brenngas- und Inertgasdurchsätze je von einfachen und zuverlässigen Durchflussmessern 33 und 34 z.B. in Form von Blenden mit zugehörigen Drucktransmittern erfasst. Diese Durchsätze werden in einem Regler 35 verglichen und in einem vorgewählten Bereich gehalten. Dazu wird ein Steuerventil 36 in der Inertgasleitung 13 vom Regler 35 entsprechend gesteuert. Die so erzeugte Gasmischung 15 wird über ein Doppelrohr 21, 22 der Kontakteinrichtung 2 explosionssicher zugeleitet. Dabei wird die Gasmischung 15 im Innenrohr 21 geführt, welches von einem Mantelrohr 22 umgeben ist. Dieses Mantelrohr wird mit Inertgas gefüllt und unter einem Ueberdruck gehalten, so dass bei einem allfälligen Leck keine zündfähige Gasmischung entstehen kann. Die Inertgasfüllung im Mantelrohr wird sichergestellt durch ein Steuerventil 37 und einen damit verbundenen Differenzdruckregler 38, mit welchem auch ein allfälliges Leck sofort erfassbar ist. An der Stelle 18 wird das Zumischgas 15 unmittelbar mit dem Kreislaufgas vermischt. Dazu dient ein Zumischorgan 19, z.B. in Form eines Lochrohres oder eines statischen Mischorgans. Die Anlage vonFig.2a weist weiter eine Vorheizung 24 für den Gaskreislauf vor dem Katalysator 9 auf, mit welcher im Anfahrbereich die erforderliche Gastemperatur im Katalysator erreicht werden kann. Diese Vorwärmung des Kreislaufgases vor dem Katalysator wird noch unterstützt durch einen Wärmetauscher 25, welchen die erwärmten Kreislaufgase nach dem Katalysator durchlaufen. Eine Strahlpumpe 26 als Fördermittel dient zur Umwälzung der Kreislaufgasmischung. Auch die Wasserzufuhr 3 weist einen Wärmetauscher 28 auf, in welchem z.B. Abwärme des Kühlwassers von anderen Aggregaten genutzt werden kann. Durch Erwärmung des zugeführten Meerwassers, z.B. von 8° auf 20°C, kann die Effizienz des erfindungsgemässen Verfahrens weiter gesteigert werden.

Fig. 2b zeigt eine zweite erfindungsgemässe Anlage 1, die sich von der Anlage der Fig. 2a dadurch unterscheidet, dass das Brenngas und das Inertgas nicht als Mischung sondern getrennt in den Kreislauf 6, 7 eingespiesen werden. Bei der Einspeisestelle 18a wird das Brenngas mit dem Wasser vermischt, das den Treibstrahl der Strahlpumpe 26 bildet. Das Inertgas wird an der Einspeisestelle 18b der Gasmischung des Kreislaufs 6, 7 zugeführt. Die in Fig. 2b weggelassenen Teile entsprechen den rechts in Fig. 2a dargestellten Teilen. Es werden die beiden Gasströme 12 und 13 ebenfalls mittels einer Dosiereinrichtung 14' wie in Fig. 2a aufeinander abgestimmt der Anlage l zugeführt.

Die weitere Beschreibung der Erfindung beschränkt sich auf das Verfahren mit der Einspeisung eines Gasgemisches gemäss Fig. 1 und Fig. 2a. Diese Ausführungen lassen sich aber sinngemäss auf das Verfahren mit getrennter Zufuhr von Brenngas und Inertgas übertragen.

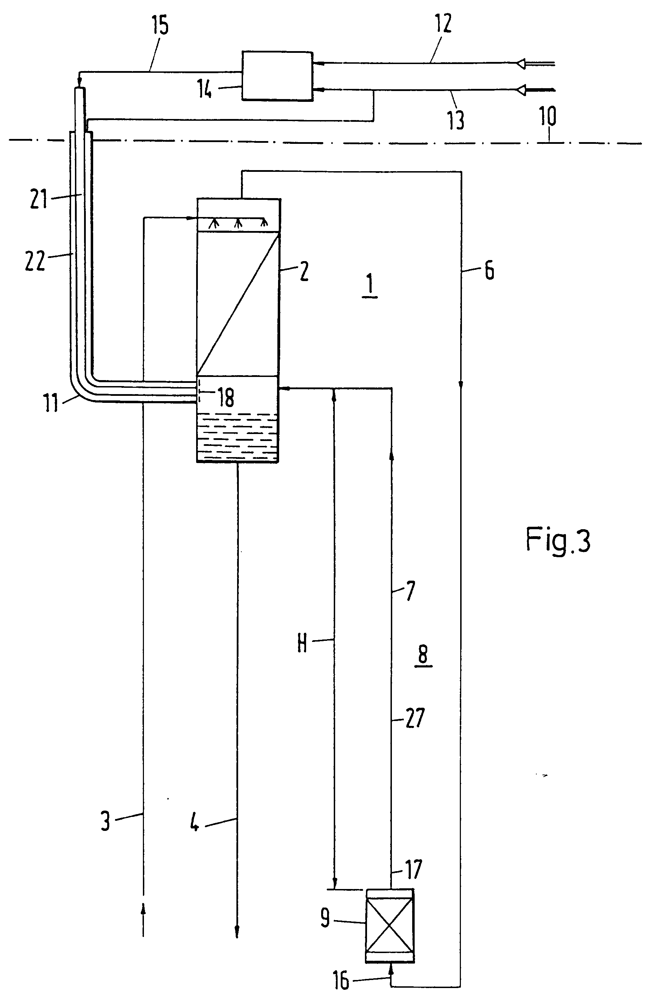

Fig.3 zeigt eine besonders einfache Anlage, in der eine Konvektionsströmung als Fördermittel 8 des Kreislaufs eingesetzt ist. Dazu wird der Katalysator 9 in einer aufsteigenden Leitung 27 zur Kontakteinrichtung 2 so eingesetzt, dass die Katalysatoreinrichtung 9 mindestens 20 m tiefer liegt als die Kontakteinrichtung 2. Hier ist es besonders wichtig, im ganzen Kreislauf nur Komponenten mit möglichst geringem Druckabfall einzusetzen. Dazu eignen sich besonders geordnete Packungen. So sind gemässFig.2a geordnete Packungen 41 in einer Gegenstrom-Stripkolonne 2 und eine geordnete Packung 42 im Katalysator 9 eingesetzt.

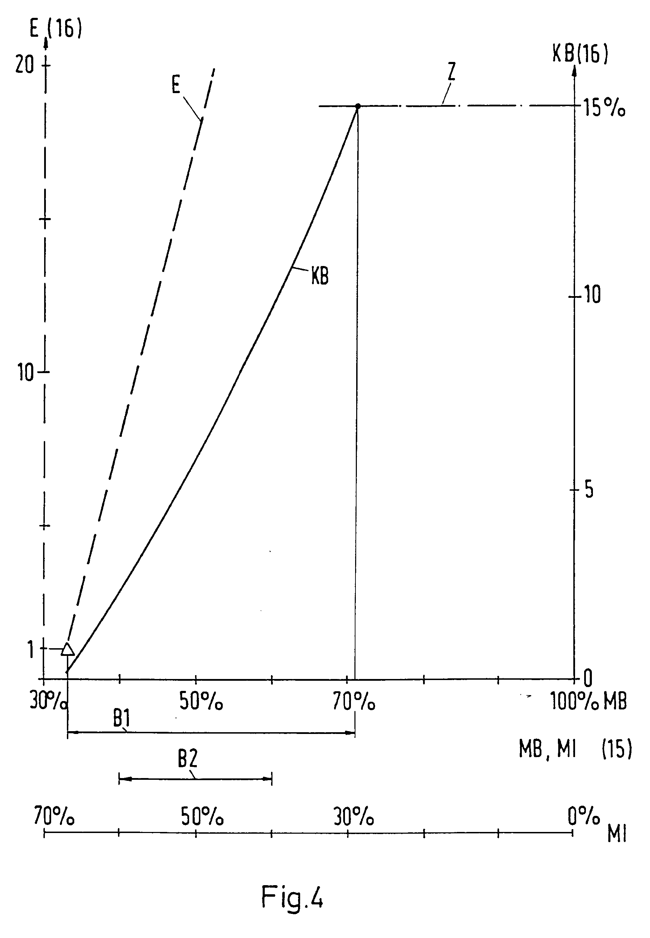

In Fig.4 ist der Einfluss der zugeführten Gasmischung 15, mit einem Brenngasanteil MB und einem Inertgasanteil MI, auf die daraus resultierende Zusammensetzung des Kreislaufgases 16 und insbesondere auf dessen Brenngasanteil KB vor dem Katalysator 9 dargestellt. In diesem Beispiel ist Erdgas als Brenngas und Stickstoff als Inertgas bei einem Kreislaufdruck von 1.25 bar eingesetzt. Die Fig.4 zeigt, dass der resultierende Brenngasanteil KB im Kreislauf an der Stelle 16 folgendermassen von der zugeführten Gasmischung 15 abhängt:
- Eine funktionsfähige Kreislaufgasmischung zur Sauerstoffentfernung entsteht bei einem Ueberschussfaktor E von mindestens 1, was schon bei einem Brenngasanteil MB von ca. 33 % Erdgas (und entsprechend ca. 67 % Stickstoff) erreicht wird.
- Die obere Grenze wird dadurch bestimmt, dass die Kreislaufgasmischung die Zündgrenze Z erreicht, was bei einem Brenngasanteil KB von ca. 15 % für Erdgas erreicht wird. Dies entspricht einem Brenngasanteil
MB von ca. 71 % Erdgas (und entsprechend 29 % N₂ im Zumischgas).

Diese untere und obere Grenze definieren einen zulässigen Bereich B1 für den Brenngasanteil von ca. MB = 71 % - 33 % = 38 %. Als praktischen Regelbereich B2 können hier z.B. MB-Werte von 40 % und 60 % Erdgas im Zumischgas gewählt werden. Dies ist sehr gut und sicher und mit einer einfachen kostengünstigen Misch- und Dosiereinrichtung 14 einhaltbar. Bei höheren Kreislaufdrücken verschieben sich die Grenzen und damit die Bereiche B1, B2 nach tieferen MB-Werten, d.h. nach tieferen Brenngasanteilen im Zumischgas 15. Eine Erhöhung der Wassertemperatur ergibt umgekehrt höhere MB-Werte für die Bereiche B1 und B2.

Als Brenngas kann Wasserstoff eingesetzt wird, wobei der Brenngasanteil im Kreislauf weniger als 4 mol % betragen soll.

Der Druck im Kreislauf wird mit Vorteil durch geregelte Zugabe des Brenngases auf einem konstanten Wert zwischen 1 und 4 bar gehalten.

Aus der eingangs genannten EP-A 0 327 491 (Fig.5) ist eine Anlage bekannt, die eine ähnliche Schaltung wie die in Fig.2b dargestellte Anlage aufweist. Allerdings ist bei der bekannten Anlage eine Explosionsgefahr nur teilweise entschärft: das Brenngas wird ohne explosionssichere Zuführung in die Anlage eingespeist, und zwar in die katalytische Verbrennungeinrichtung und nicht in den Treibstrahl der Strahlpumpe.

## Patentansprüche

1. Verfahren zum Deoxidieren von Wasser, welches zur Entfernung seines Sauerstoffgehalts mit einem gasförmigen Treibmittel in Kontakt gebracht wird, wobei das Treibmittel in einem Kreislauf zirkuliert wird, der Sauerstoff aus dem mit ihm beladenen Treibmittel in einer Vorrichtung (9) durch katalytische Verbrennung mittels eines Brenngases entfernt wird und der Brenngasanteil der zugeführten Gasmischung (15) so hoch ist, dass für die resultierende Gasmischung (16) im Kreislauf vor der Katalysatorvorrichtung (9) der Quotient von Brennstoffkonzentration des Kreislaufgases zu stöchiometrischer Bedarfskonzentration mindestens 1 beträgt,
dadurch gekennzeichnet, dass eine Mischung (15) aus einem Brenngas (12) und einem inerten Gas (13) erzeugt und dem Kreislauf (6, 7) explosionssicher zugeleitet und dem Kreislaufgas zugemischt wird (18), und dass der Inertgasanteil mindestens so hoch ist, dass die resultierende Zusammensetzung der Gasmischung (16) im Kreislauf vor der Katalysatoryorrichtung unter der Zündgrenze (Z) liegt.

2. Verfahren zum Deoxidieren von Wasser, welches zur Entfernung seines Sauerstoffgehalts mit einem gasförmigen Treibmittel in Kontakt gebracht wird, wobei das Treibmittel in einem Kreislauf zirkuliert wird, der Sauerstoff aus dem mit ihm beladenen Treibmittel in einer Vorrichtung (9) durch katalytische Verbrennung mittels eines Brenngases entfernt wird, ein Brenngas (12) und ein inertes Gas (13) getrennt in den Kreislauf (6, 7) zugespiesen werden (18a, 18b) und der Brenngasanteil der zugeführten Gasmischung (15) so hoch ist, dass für die resultierende Gasmischung (16) im Kreislauf vor der Katalysatorvorrichtung (9) der Quotient von Brennstoffkonzentration des Kreislaufgases zu stöchiometrischer Bedarfskonzentration mindestens 1 beträgt,
dadurch gekennzeichnet, dass das Brenngas explosionssicher und vermischt mit Wasser zugeführt wird, und dass die Menge des zugeführten Inertgases mindestens so hoch ist, dass die resultierende Zusammensetzung der Gasmischung (16) im Kreislauf vor der Katalysatorvorrichtung unter der Zündgrenze (Z) liegt.

3. Verfahren nach Anspruch 1 oder 2, dadurch gekennzeichnet, dass als Brenngas (12) Erdgas eingesetzt wird und dass der Brenngasanteil im Kreislauf weniger als 15 mol % beträgt.

4. Verfahren nach Anspruch 1 oder 2, dadurch gekennzeichnet, dass als Brenngas (12) Wasserstoff eingesetzt wird und dass der Brenngasanteil im Kreislauf weniger als 4 mol % beträgt.

5. Verfahren nach Anspruch 1 oder 2, dadurch gekennzeichnet, dass als Inertgas (13) Stickstoff eingesetzt wird.

6. Verfahren nach Anspruch l oder 2, dadurch gekennzeichnet, dass der Druck im Kreislauf durch geregelte Zugabe des Brenngases (12) auf einem konstanten Wert zwischen 1 und 4 bar gehalten wird.

7. Anlage zur Ausführung des Verfahrens nach Anspruch 1 mit einer Kontakteinrichtung (2), welche einen Wasserzulauf (3) und einen Ablauf (4) aufweist, sowie mit einem Kreislauf für das gasförmige Treibmittel, welcher Verbindungsleitungen (6, 7) zwischen der Kontakteinrichtung (2) und einer Katalysatorvorrichtung (9) sowie ein Fördermittel (8) aufweist,
gekennzeichnet durch je eine Zuführung für ein Brenngas (12) und ein Inertgas (13), welche in einer Misch- und Dosiereinrichtung (14) zusammengeführt und als Gasmischung (15) in einer explosionssicheren Zuführung (11) zum Kreislauf (6, 7) geleitet und dem Kreislaufgas zugemischt wird.

8. Anlage zur Ausführung des Verfahrens nach Anspruch 2 mit einer Kontakteinrichtung (2), welche einen Wasserzulauf (3) und einen Ablauf (4) aufweist, mit einem Kreislauf für das gasförmige Treibmittel, welcher Verbindungsleitungen (6, 7) zwischen der Kontakteinrichtung (2) und einer Katalysatorvorrichtung (9) sowie ein Fördermittel (8) aufweist, sowie mit getrennten Zuführungen (12, 13) für ein Brenngas und ein Inertgas in den Kreislauf,
dadurch gekennzeichnet, dass die Zuführung für das Brenngas (12) explosionssicher ist und dass eine Dosiereinrichtung (14') in den Zuführungen (12, 13) angeordnet ist, mit der sich das Verhältnis der beiden Gase einstellen lässt.

9. Anlage nach Anspruch 7 oder 8, dadurch gekennzeichnet, dass die Misch- und Dosiereinrichtung (14) beziehungsweise Dosiereinrichtung (14') folgende Komponenten aufweist: einen Druckregler (31) in der Zuleitung des Brenngases (12) und ein damit verbundenes Steuerventil (32), mit denen das Brenngas (12) geregelt eingespiesen wird, so dass der Druck in der Kontakteinrichtung (2) konstant bleibt, sowie zur Dosierung des Inertgases (13) je einen Durchflussmesser (33, 34) zur Erfassung von Brennbeziehungsweise Inertgas und einen damit verbundenen Regler (35), welcher ein zweites Steuerventil (36) für das Inertgas (13) so steuert, dass das Verhältnis vom Brenngas zu Inertgas in einem vorgegebenen Bereich gehalten wird.

10. Anlage nach Anspruch 7 oder 8, gekennzeichnet durch eine explosionssichere Zuführung (11) in Form eines Doppelrohres, bestehend aus einem Innenrohr (21) für das Brenngas bzw. die Gasmischung (15) und einem Mantelrohr (22), welches mit Inertgas (12) gefüllt ist.

11. Anlage nach Anspruch 10, dadurch gekennzeichnet, dass das Mantelrohr (22) mit der Inertgaszuspeisung (13) über ein Steuerventil (37) verbunden ist, welches von einem Differenzdruckregler (38) gesteuert ist.

12. Anlage nach Anspruch 7 oder 8, dadurch gekennzeichnet, dass als Fördermittel (8) des Kreislaufs eine Konvektionsströmung eingesetzt ist, wobei der Katalysator (9) in einer aufsteigenden Leitung (27) zur Kontakteinrichtung (2) und tieferliegend als die Kontakteinrichtung (2) angeordnet ist.

## Claims

1. A process for the deoxidisation of water, which is brought into contact with a gaseous propellant for the removal of its oxygen content, whereby the propellant is circulated in a circulation, the oxygen is removed from the propellant charged therewith in a device (9) by catalytic combustion by means of a fuel gas and the fuel gas content of the gas mixture supplied (15) is sufficiently high so that, for the resultant gas mixture (16) in the circulation in front of the catalyst device (9), the quotient of fuel concentration of the recycling gas to stoichiometric required concentration is at least 1,
**characterized in that** a mixture (15) is produced from a fuel gas (12) and an inert gas (13) and is conveyed to the circulation (6, 7) in an explosion-proof manner and is added to the recycling gas (18),
**and in that** the inert gas content is at least sufficiently high for the resultant composition of the gas mixture (16) in the circulation in front of the catalyst device to lie beneath the ignition limit (Z).

2. A process for the deoxidisation of water, which is brought into contact with a gaseous propellant for the removal of its oxygen content, whereby the propellant is circulated in a circulation, the oxygen is removed from the propellant charged therewith in a device (9) by catalytic combustion by means of a fuel gas, a fuel gas (12) and an inert gas (13) are conveyed (18a, 18b) separately into the circulation (6, 7) and the fuel gas content of the supplied gas mixture (15) is sufficiently high so that, for the resultant gas mixture (16) in the circulation in front of the catalyst device (9), the quotient of fuel concentration of the recycling gas to stoichiometric required concentration is at least 1, **characterized in that** the fuel gas is supplied in an explosion-proof manner and mixed with water, and in that the quantity of supplied fuel gas is at least so high for the resultant composition of the gas mixture (16) in the circulation in front of the catalyst device to lie beneath the ignition limit (Z).

3. A process according to Claim 1 or 2,
**characterized in that** natural gas is used as fuel gas (12),
**and in that** the fuel gas content in the circulation is less than 15 mol %.

4. A process according to Claim 1 or 2,
**characterized in that** hydrogen is used as fuel gas (12),
**and in that** the fuel gas content in the circulation is less than 4 mol %.

5. A process according to Claim 1 or 2,
**characterized in that** nitrogen is used as inert gas (13).

6. A process according to Claim 1 or 2,
**characterized in that** the pressure in the circulation is kept at a constant value of between 1 and 4 bar by the controlled addition of the fuel gas (12).

7. A plant for performing the process according to Claim 1, having a contact device (2), which comprises a water inlet (3) and an outlet (4), and also having a circulation for the gaseous propellant, which comprises connection lines (6, 7) between the contact device (2) and a catalyst device (9) and also a conveying medium (8),
**characterized by** one supply line each for a fuel gas (12) and an inert gas (13), which are brought together in a mixing and metering device (14) and are conveyed as a gas mixture (15) in an explosion-proof supply line (11) to the circulation (6, 7) and added to the recycling gas.

8. A plant for performing the process according to Claim 2 having a contact device (2), which comprises a water inlet (3) and an outlet (4), having a circulation for the gaseous propellant, which comprises connection lines (6, 7) between the contact device (2) and a catalyst device (9) and also a conveying medium (8), and also with separate supply lines (12, 13) for a fuel gas and an inert gas in the circulation,
**characterized in that** the supply line for a fuel gas (12) is explosion-proof,
**and in that** a metering device (14') is disposed in the supply lines (12, 13) with which the ratio of the two gases (12, 13) can be adjusted.

9. A plant according to Claim 7 or 8,
**characterized in that** the mixing and metering device (14) or respectively the metering device (14') comprises the following components: a pressure control device (31) in the supply line of the fuel gas (12) and a control valve (32) connected thereto, with which the fuel gas (12) is fed in a controlled manner so that the pressure in the contact device (2) remains constant, and also, for metering the inert gas (13) a flowmeter (33, 34) each for detecting fuel gas and inert gas and a controller (35) connected thereto, which controls a second control valve (36) for the inert gas (13) so that the ratio of fuel gas to inert gas is kept within a prescribed range.

10. A plant according to Claim 7 or 8,
**characterized by** an explosion-proof supply line (11) in the form of a double pipe, consisting of an inner pipe (21) for the fuel gas or respectively the gas mixture (15) and a casing (22), which is filled with inert gas (12).

11. A plant according to Claim 10,
**characterized in that** the casing (22) is connected to the inert gas supply line (13) via a control valve (37), which is controlled by a differential pressure control device (38).

12. A plant according to Claim 7 or 8,
**characterized in that** a convection flow is used as a conveying medium (8) for the circulation, the catalyst (9) being disposed in an ascending line (27) to the contact device (2) and lower than the contact device (2).

## Revendications

1. Procédé pour la désoxydation de l'eau qui, pour l'élimination de sa teneur en oxygène, est mise en contact avec un agent d'entraînement gazeux et l'agent d'entraînement est mis en circulation dans un circuit, l'oxygène sortant de l'agent d'entraînement qui en est chargé est éliminé dans un dispositif (9) par combustion catalytique au moyen d'un gaz de combustion et la proportion de gaz de combustion du mélange de gaz introduit (15) est si élevée que pour le mélange de gaz résultant (16) en circuit avant le dispositif catalyseur, (9) le quotient de la concentration en combustible du gaz du circuit à la concentration stoechiométrique nécessaire est d'au moins 1,
caractérisé en ce qu'un mélange (15) d'un gaz de combustion (12) et d'un gaz inerte (13) est produit et est conduit au circuit (6, 7) de façon anti-explosion et est mélangé au gaz du circuit (18) et en ce que la proportion de gaz inerte est au moins suffisamment élevée pour que la composition résultante du mélange de gaz (16) dans le circuit se trouve devant le dispositif catalyseur en dessous de la limite d'allumage (Z).

2. Procédé pour la désoxydation de l'eau qui, pour l'élimination de sa teneur en oxygène, est mise en contact avec un agent d'entraînement gazeux, où l'agent d'entraînement est mis en circulation dans un circuit, l'oxygène provenant de l'agent d'entraînement dont il est chargé est diminué dans dispositif (9), par combustion catalytique au moyen d'un gaz de combustion, un gaz de combustion (12) et un gaz inerte (13) sont introduits (18a, 18b) séparément dans le circuit (6, 7) et la proportion de gaz de combustion du mélange de gaz introduit (15) est si élevée que pour le mélange de gaz résultant (16) dans le circuit devant le dispositif catalyseur (9), le quotient de la concentration du gaz de combustion du gaz du circuit par rapport à la concentration stoechiométrique nécessaire est d'au moins 1,
caractérisé en ce que le gaz de combustion est conduit de façon anti-explosive et en mélange avec l'eau et en ce que la quantité du gaz inerte amené est au moins suffisamment élevée pour que la composition résultante du mélange gazeux (16) dans le circuit devant le dispositif catalyseur se trouve en dessous de la limite d'allumage (Z).

3. Procédé selon la revendication 1 ou 2, caractérisé en ce qu'en tant que gaz de combustion (12), on utilise du gaz naturel et en ce que la proportion de gaz de combustion dans le circuit est de moins de 15 % en moles.

4. Procédé selon la revendication 1 ou 2, caractérisé en ce qu'en tant que gaz de combustion (12), on utilise de l'hydrogène et en ce que la proportion de gaz de combustion dans le circuit est de moins de 4 % en moles.

5. Procédé selon la revendication 1 ou 2, caractérisé en ce qu'on utilise en tant que gaz inerte (13), de l'azote.

6. Procédé selon la revendication 1 ou 2, caractérisé en ce que la pression dans le circuit est maintenue, par alimentation régulée du gaz de combustion (12), à une valeur constante comprise entre 1 et 4 bars.

7. Installation pour la réalisation du procédé selon la revendication 1 avec un système de contact (2), qui présente une arrivée d'eau (3) et un départ (4), ainsi qu'avec un circuit pour l'agent d'entraînement gazeux qui présente des conduites de liaison (6, 7) entre le système de contact (2) et un dispositif catalyseur (9) ainsi qu'un agent d'acheminement (8),
caractérisée par une alimentation pour un gaz de combustion (12) et une pour un gaz inerte (13), qui sont conduits dans un système de mélange et de dosage (14) ensemble et menés en tant que mélange de gaz (15) dans une conduite (11) anti-explosion vers le circuit (6, 7) pour un mélange avec le gaz du circuit.

8. Installation pour la réalisation du procédé selon la revendication 2, avec un système de contact (2) qui présente une arrivée d'eau (3) et un départ (4) avec un circuit pour l'agent d'entraînement gazeux qui présente des conduites de liaison (6, 7) entre le système de contact (2) et un dispositif catalyseur (9) ainsi qu'un agent d'acheminement (8) et des alimentations séparées (12, 13) pour un gaz de combustion et un gaz inerte dans le circuit,
caractérisée en ce que l'alimentation pour le gaz de combustion (12) est anti-explosion et en ce qu'un système de dosage (14') est agencé dans les conduites (12, 13), avec lequel on peut ajuster le rapport des deux gaz.

9. Installation selon la revendication 7 ou 8, caractérisée en ce que le système de mélange et de dosage (14) ou respectivement le système de dosage (14') présente les composants suivants : un régulateur de pression (31) dans la conduite du gaz de combustion (12) et une soupape de commande (32) qui lui est reliée, avec laquelle le gaz de combustion (12) est alimenté de façon régulée, pour que la pression dans le système de contact (2) reste constante ainsi que pour le dosage du gaz inerte (13), à chaque fois un appareil de mesure du débit (33, 34) pour la saisie du gaz de combustion ou respectivement du gaz inerte et un régulateur (35) qui lui est relié, qui commande une seconde soupape de commande (36) pour le gaz inerte (13) de façon que le rapport du gaz de combustion au gaz inerte soit maintenu dans une plage prédéterminée.

10. Installation selon la revendication 7 ou 8, caractérisée par une conduite anti-explosion (11) sous la forme d'un tube double, se composant d'un tube interne (21) pour le gaz de combustion ou respectivement le mélange de gaz (15) et d'une enveloppe (22) qui est remplie d'un gaz inerte (12).

11. Installation selon la revendication 10, caractérisée en ce que l'enveloppe (22) est reliée à l'alimentation en gaz inerte (13) au moyen d'une soupape de commande (37) qui est commandée par un régulateur de différence de pression (38).

12. Installation selon la revendication 7 ou 8, caractérisée en ce qu'en tant qu'agent d'acheminement (8) du circuit, on utilise un écoulement de convexion et où le catalyseur (9) est agencé dans une conduite montante (27) vers le système de contact (2) et qui se trouve plus en profondeur que le système de contact (2).
